# EUROPEAN PATENT APPLICATION

(11) **EP 3 150 329 A1**
(43) Date of publication of application: **05.04.2017**
(21) Application number: 14893203.1
(22) Date of filing: 27.05.2014
(51) Int. Cl.: B23P 19/02, B25J 15/08, B25J 17/02

(54) **AUTOMATIC ASSEMBLY APPARATUS AND CONTROL METHOD THEREFOR**

(71) Applicant: Kawasaki Jukogyo Kabushiki Kaisha, Kobe-shi, Hyogo 650-8670 (JP)
(72) Inventor: KURAOKA Shuhei, Akashi-shi Hyogo 673-8666 (JP); MIZUMOTO Hiroyuki, Akashi-shi Hyogo 673-8666 (JP)
(74) Representative: Müller-Boré & Partner Patentanwälte PartG mbB
(86) International application number: PCT/JP2014/063978
(87) International publication number: WO 2015/181891

(57) **Abstract**

The device has a linear motion drive unit 3 for linearly driving a base portion 6 along a fitting direction of one member and the other member, a rotary drive unit 5 for rotationally driving the base portion 6 about a center axis line A0, a movable portion 7 provided to the base portion 6 movably along the fitting direction, a member holding unit 11 provided to the movable portion 7 for releasably holding the one member, an elastic unit 10 for applying elastic force between the base portion 6 and the movable portion 7, a sensor unit 13 for obtaining distance change information of the base portion 6 and the movable portion 7, and a fitting state determination unit 2 for determining a fitting state of the one member and the other member based on the distance change information. The device enables members to be fitted to each other without any problem, when at least one of the members has a noncircular cross section.

## Description

### Technical Field

The present invention relates to an automatic assembly device for automatically fitting one member to the other member and its control method.

### Background Art

Conventionally, an automatic assembly device which fits an insertion member into a recessed portion or a hole of a receiving member is known. In a conventional automatic assembly device, an insertion member of which cross-section in a direction orthogonal to a fitting direction is circular is fitted into a recessed portion or a hole of a receiving member having a circular cross-section similarly.

As the insertion member and the receiving member handled by the conventional automatic assembly device are circular in cross-section in the direction orthogonal to the fitting direction, relative angular positions of the insertion member and the receiving member about a center axis line extending in the fitting direction do not need to be matched with each other in fitting.

As mentioned above, the conventional automatic assembly device is suitable for the insertion member and the receiving member which are circular in cross-section in the direction orthogonal to the fitting direction. Therefore, when at least one of the insertion member and receiving member has a non-circular cross section, they cannot be handled.

A wave generator which is inserted into a flex spline of a wave motion gear device is given as an example of the insertion member with a non-circular cross section (Patent Document 1). The wave generator has a structure that a thin ball bearing is fitted to an outer periphery of an elliptic cam. The flex spline is configured by a thin-cap-shaped metal elastic member and a tooth is formed in an outer periphery thereof.

Note that the cross section shape of the flex spline in the direction orthogonal to the fitting direction is circular in a state before the wave generator is fitted, and by the wave generator being fitted, the cross section of the flex spline is elastically deformed into an elliptic shape along an elliptic cross section shape of the wave generator.

### Citation List

### Patent Document

[Patent Document 1] Japanese Patent Application Laid-Open No. S62-113941

### Summary of Invention

### Objects to be Achieved by the Invention

As mentioned above, in the wave motion gear device, the cross section in the direction orthogonal to the fitting direction of the wave generator as an insertion member is elliptic, not circular. On the other hand, the flex spline as a receiving member is configured with a circular cross section by the thin-cap-shaped metal elastic member.

Moreover, a circular spline is arranged around the flex spline, and the number of external teeth formed on an outer peripheral surface of the flex spline and the number of internal teeth formed on an inner peripheral surface of the circular spline do not coincide with each other. For example, the circular spline has two more teeth than the flex spline.

Accordingly, a plurality of external teeth of the flex spline and a plurality of internal teeth of the circular spline do not face each other in a uniform state in the circumference direction, and parts capable of meshing with each other and parts incapable of meshing with each other are mixed. Therefore, when the wave generator with the elliptic cross section is fitted to the flex spline with the circular cross section, the external teeth of the flex spline in a part expanded outside by the fitting might mesh or might not mesh with the internal teeth of the circular spline.

As a result, work of fitting the wave generator of the wave form gear device to the flex spline becomes complicated, and therefore an operator performs the work by hand. Namely, the operator grips a motor on which the wave generator is mounted while rotating the wave generator and the flex spline relatively to each other about an axis line extending in the fitting direction so as to find out a position where the external teeth of the flex spline and the internal teeth of the circular spline mesh with each other by feeling.

After finding out the position where the external teeth of the flex spline and the internal teeth of the circular spline mesh with each other by feeling, the operator starts applying pressing force slightly while rotating the wave generator in forward and reverse directions so as to push the wave generator into the flex spline.

Note that, if the wave generator is forcibly pressed into the flex spline in a position where the external teeth of the flex spline and the internal teeth of the circular spline do not mesh with each other or the pressing force is applied too much, the wave motion gear device might become unable to operate normally.

As mentioned above, the wave generator and the flex spline are fitted to each other manually by the operator, additionally, personal skill is also needed for adjustment of level of force and phase matching. Therefore, there is a problem that much burden is applied on the operator.

Also, not only for the wave generator and the flex spline of the wave motion gear device, when a section in the direction orthogonal to the fitting direction is noncircular in at least one of the insertion member and the receiving member, automating the fitting operation is difficult. For example, for fitting the insertion member with the elliptic cross section to the receiving member with the elliptic cross section, phases of the both members need to be matched before fitting.

The present invention is made considering the above-mentioned problems of conventional technologies and its object is to provide an automatic assembly device which enables one member and the other member to be fitted to each other without any problem even when at least one of the members has a noncircular cross section in the direction orthogonal to the fitting direction and its control method.

### Mean for Achieving the Objects

In order to achieve the objects, a first aspect of the present invention is an automatic assembly device for automatically fitting one member to the other member, having a base portion, a linear motion drive means for linearly driving the base portion along a fitting direction of the one member and the other member, a rotary drive means for rotationally driving the base portion about a center axis line extending in the fitting direction, a movable portion provided to the base portion movably along the fitting direction, a member holding means provided to the movable portion for releasably holding the one member, an elastic means for applying elastic force between the base portion and the movable portion, a sensor means for obtaining a distance change information about a change in distance between the base portion and the movable portion, and a fitting state determination means for determining a fitting state of the one member and the other member based on the distance change information.

A second aspect of the present invention is that the linear motion drive means and the rotary drive means are configured by a robot arm, the base portion being mounted on the robot arm in the first aspect.

A third aspect of the present invention is that the fitting state determination means is configured by a robot controller for controlling the robot arm in the second aspect.

A forth aspect of the present invention is that the member holding member is configured so as to be controlled by the robot controller for controlling the robot arm in the second or the third aspect.

A fifth aspect of the present invention is that the elastic means has an air cylinder in any of the first to forth aspects.

A sixth aspect of the present invention is that the sensor means has a range finder for measuring a distance between the base portion and the movable portion in any of the first to fifth aspects.

A seventh aspect of the present invention is that the one member is elliptic in cross section in a direction orthogonal to the fitting direction, the other member having a receiving recessed portion into which the one member is inserted in any of the first to sixth aspects.

An eighth aspect of the present invention is that the receiving recessed portion is formed of a flexible material in the seventh aspect.

A ninth aspect of the present invention is that the receiving recessed portion is circular in cross section in the direction orthogonal to the fitting direction, the other member being elastically deformed in a necessary long axis direction when the one member is inserted into the receiving recessed portion.

In order to achieve the above-mentioned objects, a tenth aspect of the present invention is a method for controlling an automatic assembly device according to any one of the first to ninth aspects, having a member arrangement step of arranging the one member to an approach position immediately above the other member in a state that the one member is held by the member holding means, a preliminary fitting operation step of moving the base portion toward the other member by a predetermined preliminary fitting operation distance, a preliminary fitting success/failure determination step of determining if a preliminary fitting of the one member to the other member has succeeded or not based on the distance change information, a complete fitting step that the one member is completely fitted into the other member when the preliminary fitting is determined to have succeeded, a member retreat step of retreating the one member to the approach position when the preliminary fitting is determined to have failed.

A eleventh aspect of the present invention is that a member rotation step of rotating the one member about the center axis line by a predetermined angle at the same time as or after the member retreat step is further provided in the tenth aspect.

A twelfth aspect of the present invention is that an operation of performing the preliminary fitting operation step after the member retreat step and the member rotation step is repeated, finishing the fitting operation when the number of repetitive operations exceeds a predetermined number in the eleventh aspect.

The thirteenth aspect of the present invention is that the one member is rotated about the center axis line in the complete fitting step in any of the tenth to twelfth aspects.

The fourteenth aspect of the present invention is that the one member is elliptic in cross section in a direction orthogonal to the fitting direction, the other member having a receiving recessed portion into which the one member is inserted, the receiving recessed portion being formed of a flexible material in any of the tenth to thirteenth aspects.

### Effect of the Invention

The present invention can provide an automatic assembly device which enables one member and the other member to be fitted to each other without any problem even when at least one of the members is noncircular in cross section in the direction orthogonal to the fitting direction and its control method.

### Brief Description of the Drawings

FIG. 1 is a front view illustrating a schematic configuration of an automatic assembly device according to an embodiment of the present invention.
FIG. 2 (a) illustrates a state that an insertion member placed on a workbench together with a receiving member is gripped by an end effector of the automatic assembly device in FIG. 1, and (b) illustrates a phase of the receiving member.
FIG. 3 (a) illustrates a state that the insertion member gripped by the end effector of the automatic assembly device in FIG. 1 is arranged to an approach position immediately above the receiving member, (b) illustrates a phase of the insertion member, and (c) illustrates a phase of the receiving member.
FIG. 4 (a) illustrates a state that the insertion member gripped by the end effector of the automatic assembly device in FIG. 1 fails in preliminary fitting to the receiving member, (b) illustrates a phase of the insertion member, and (c) illustrates a phase of the receiving member.
FIG. 5 (a) illustrates a state that the insertion member gripped by the end effector of the automatic assembly device in FIG. 1 succeeds in preliminarily fitting to the receiving member, (b) illustrates a phase of the insertion member, and (c) illustrates a phase of the receiving member.
FIG. 6 (a) illustrates a state that the insertion member gripped by the end effector of the automatic assembly device in FIG. 1 is rotated while being pressed into the receiving member, (b) illustrates a phase of the insertion member, and (c) illustrates a phase of the receiving member.
FIG. 7 (a) illustrates a state that the insertion member gripped by the end effector of the automatic assembly device in FIG. 1 has finished being fitted to the receiving member, (b) illustrates a phase of the insertion member, and (c) illustrates a phase of the receiving member.
FIG. 8 is a flow chart illustrating a fitting operation as a method for controlling the automatic assembly device in FIG. 1.

### Embodiment of the Invention

Hereunder, an automatic assembly device according to an embodiment of the present invention and its control method will be described referring to the figures.

The automatic assembly device of the embodiment is a device for an insertion member (one member) and a receiving member (the other member) to be fitted to each other automatically. Note that the case that a wave generator (insertion member) and a flexspline (receiving member) of a wave motion gear device are fitted to each other will be described as an example hereunder.

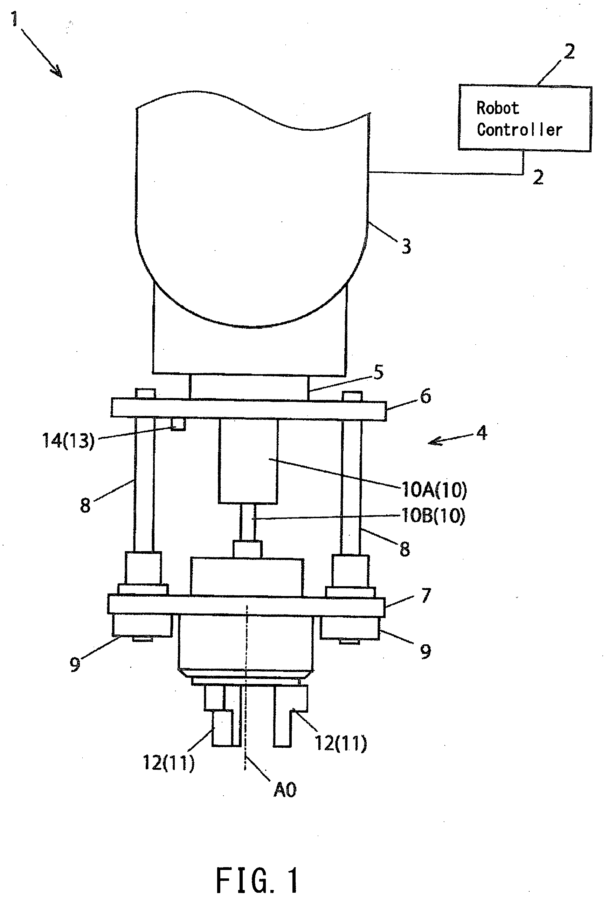

As illustrated in FIG. 1, an automatic assembly device 1 of the embodiment has a robot controller 2 for a articulated robot, a robot arm 3 for the articulated robot controlled by the robot controller 2, and an end effector 4 mounted to a tip end of the robot controller 3.

The end effector 4 has a base portion 6 fixed to a rotary shaft 5 on the tip end of the robot arm 3. The robot arm 3 configures a base portion drive means for linearly driving the base portion 6 along a fitting direction. The rotary shaft 5 on the tip end of the robot arm 3 configures a rotary drive means for rotationally driving the base portion 6 about a center axis line A0 extending in the fitting direction.

A movable portion 7 is separately provided below the base portion 6. A linear motion of the movable portion 7 is guided by a plurality of (three in the example) guide members 8 whose upper ends are fitted to the base portion 6. Thereby, the movable portion 7 can move to the base portion 6 along the fitting direction (direction of the center axis line A0). A stopper member 9 is provided at a lower end of the guide member 8, and a movement of the movable portion 7 in a direction separated from the base portion is restricted by the stopper member 9.

An air cylinder (elastic means) 10 is provided between the base portion 6 and the movable portion 7, a rear end of a cylinder body 10A of the air cylinder 10 is fixed to the base portion 6, and a tip end of a piston 10B presses the movable portion 7. Elastic force is applied between the base portion 6 and the movable portion 7 by the air cylinder 10.

A member holding means 11 for releasably holding the insertion member is provided on a lower surface of the movable portion 7. The member holding means 11 is configured to have a plurality of (three in the example) movable gripping claws 12 movable in a radial direction with respect to the center axis line A0 so as to clamp the insertion member by the plurality of movable gripping claws 12. A movement of the movable gripping claws 12 for holding the insertion member is controlled by the robot controller 2.

A range finder 14 as a sensor means 13 for obtaining distance change information about change in distance between the base portion 6 and the movable portion 7 is provided to the base portion 6. The range finder 14 is configured by an optical sensor, for example, so as to measure distance between the base portion 6 and the movable portion 7.

An output signal (distance change information) of the range finder 14 is transmitted to the robot controller 2. The robot controller 2 functions as a fitting state determination means for determining a fitting state of the insertion member and the receiving member based of the obtained distance change information.

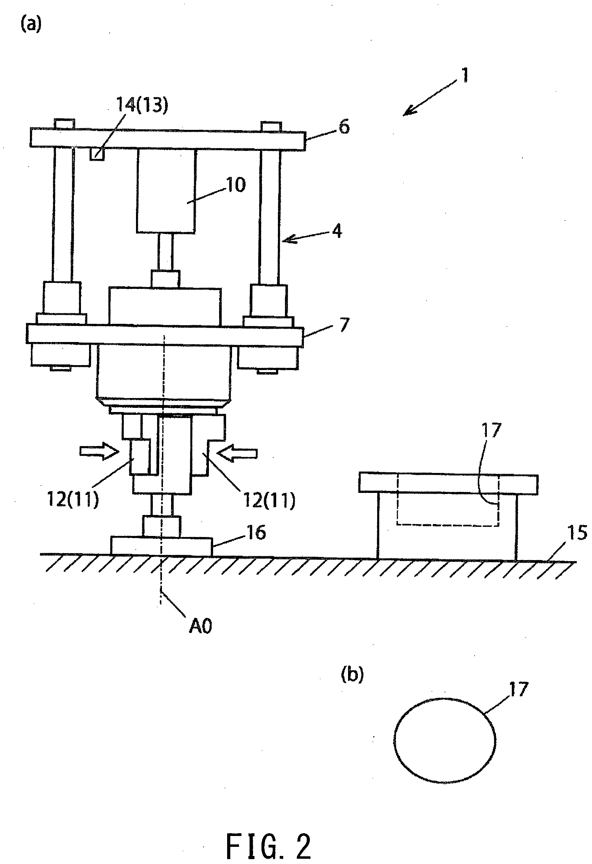

Next, a method for fitting a wave generator as an insertion member to a flexspline as an receiving member by controlling the automatic assembly device 1 of the embodiment will be described referring to FIGS. 2 to 8.

Note that, as described above, a cross section shape of the flexspline (receiving member) in the direction orthogonal to the fitting direction is circular in a state before the wave generator (insertion member) is fitted thereto, and the cross section of the flexspline is elastically deformed into an ellipse along the elliptic cross section shape of the wave generator.

Also, external teeth of the flexspline and internal teeth of the circular spline respectively have a portion which can mesh with each other and cannot mesh with each other because of difference in the number of their teeth.

In FIGS. 2 to 7(c), the shape of the receiving member is illustrated in an ellipse in order to clearly show portions where the external teeth of the flexspline and the internal teeth of the circular spline can or cannot mesh with each other. Namely, a portion corresponding to the long axis of the ellipse corresponds to the portion capable of meshing, and the other portion corresponds to a portion incapable of meshing. Namely, meshing becomes possible when the flexspline as a circle which can be elastically deformed coincides with the long axis of the ellipse illustrated in FIGS. 2 to 7(c) by the wave generator being inserted. Namely, meshing becomes possible when the circular flexspline capable of being elastically deformed coincides with the long axis of the ellipse illustrated in FIGS. 2 to 7 (c) by insertion of the wave generator.

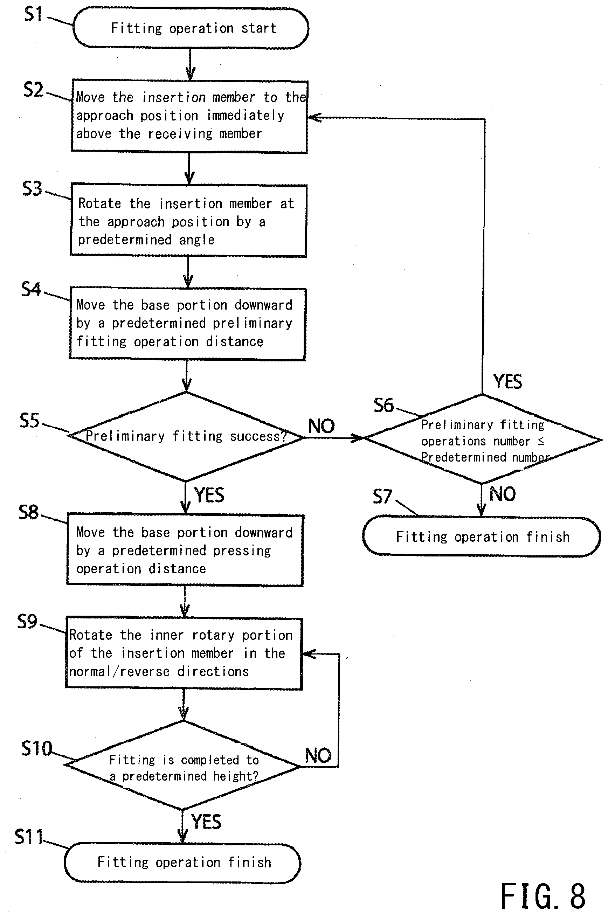

When the wave generator is fitted into the flexspline using the automatic assembly device 1 of the embodiment, firstly fitting operation by the automatic assembly device 1 is started (step S1 in FIG. 8), and the robot arm 3 and the member holding means 11 are controlled by the robot controller 2 so as to hold an insertion member (one member) 16 placed on a workbench 15 illustrated in FIG. 2 by a movable gripping claw 12. More specifically, a motor on which the wave generator as the insertion member 16 is mounted is held by the movable gripping claw 12. A receiving member 17 to be fitted to the insertion member 16 is also placed on the workbench 15. The receiving member 17 is a flexspline formed of a flexible metal member, and a circular spline is arranged around the flexspline.

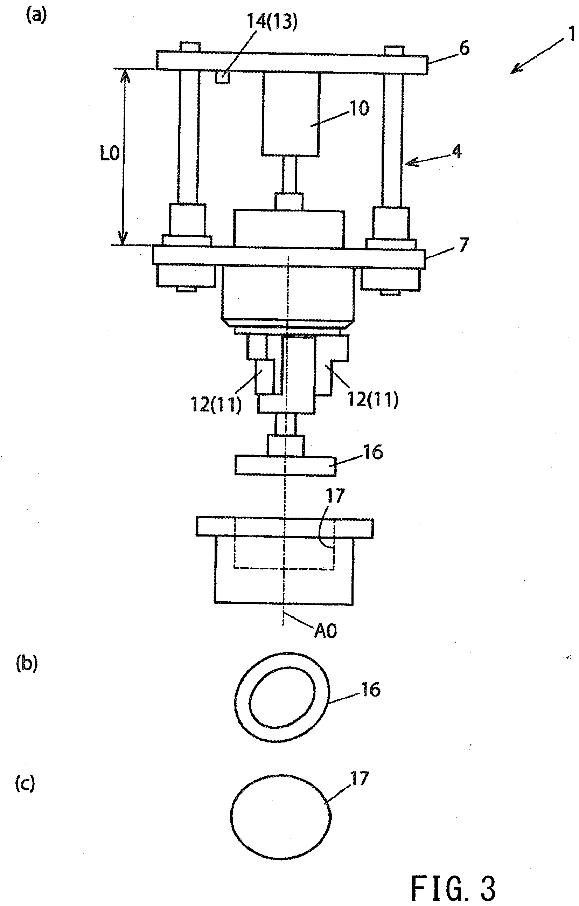

The robot arm 3 is driven in a state that the insertion member 16 is held by the movable gripping claw 12 so as to move the insertion member 16 to an approach position immediately above the receiving member 17 (insertion member arrangement step: step S2 in FIG. 8) as illustrated in FIG.3 (a). At this time, the distance between the base portion 6 and the movable portion 7 is the maximum distance L0.

The rotary shaft 5 on the tip end of the robot arm 3 is rotationally driven in a state illustrated in FIG. 3 (a) so as to rotate the insertion member 16 together with the base portion 6 about the center axis line A0 by a predetermined angle (insertion member rotation step: step S3 in FIG. 8). The predetermined angle at this time can be determined arbitrarily according to the shapes of the insertion member 16 and the receiving member 17, and it shall be nearly 10° in the example.

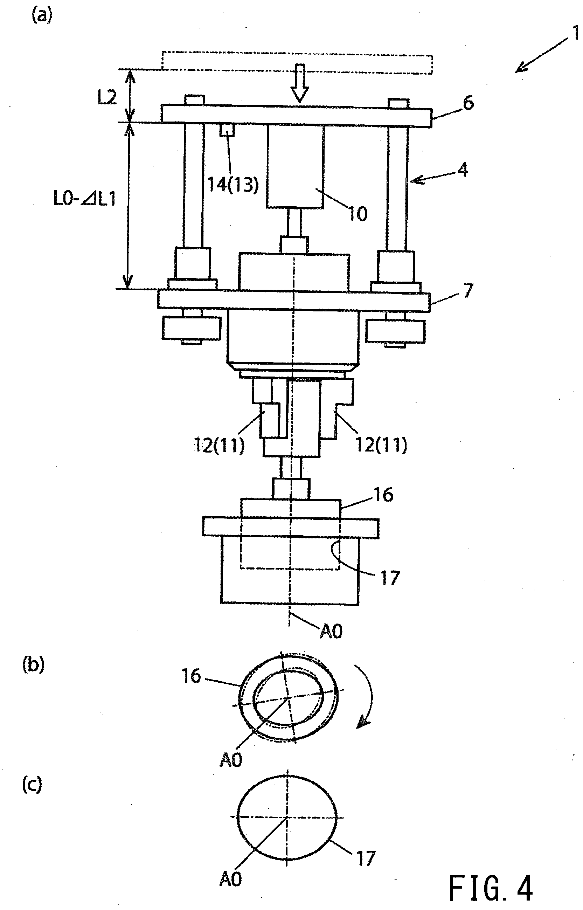

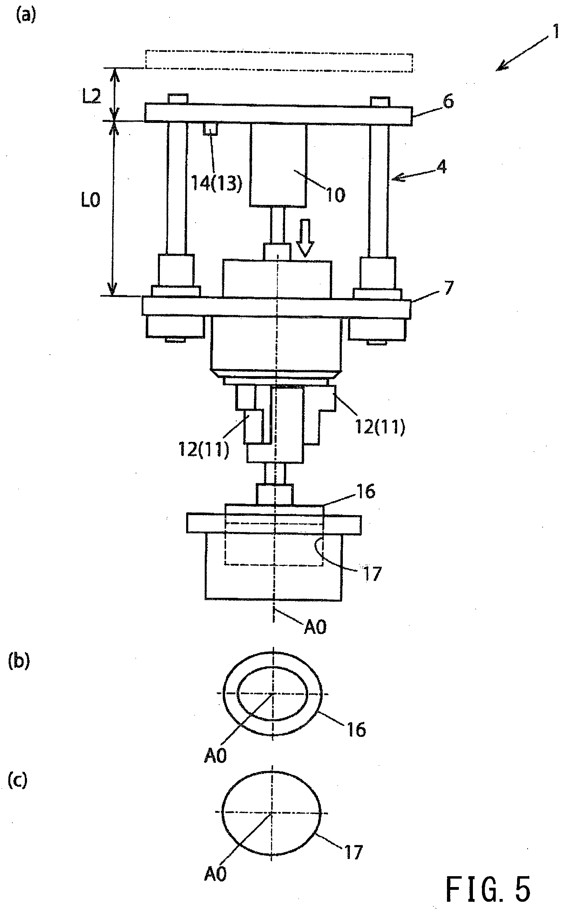

Next, the robot arm 3 is driven so as to move the base portion 6 to the receiving member 17 along the fitting direction (direction of center axis line A0) by a predetermined preliminary fitting operation distance L2 (FIG. 4 (a), FIG. 5(a)) (preliminary fitting operation step: step S4 in FIG. 8).

In the preliminary fitting operation step S4, when a phase of the insertion member 16 and a phase of the receiving member 17 do not coincide with each other as illustrated in FIG. 4 (b), (c), the lower surface of the insertion member 16 is pressed against the upper end of the receiving member 17. Thereby, reaction force acts on the insertion member 16 from the receiving member 17, and the movable portion 7 is pushed up in the direction of the base portion 6 by the reaction force resisting elastic force of the air cylinder 10 as illustrated in FIG. 4 (a).

Therefore, the distance between the base portion 6 and the movable portion 7 measured by the range finder 14 shall be L0-ΔL1 as illustrated in FIG. 4 (a). The robot controller detects that the distance between the base portion 6 and the movable portion 7 is changed from L0 to L0 - ΔL1 and determines that the preliminary fitting of the insertion member 16 to the receiving member 17 have failed (preliminary fitting failure/success determination step: step S5 in FIG. 8).

When the preliminary fitting is determined to have failed in the preliminary fitting success/failure determination step S5, the number of preliminary fitting operations is determined if it is less than the predetermined member or not (step S6 in FIG. 8), and the fitting operation is finished when it exceeds the predetermined number (step S7 in FIG. 8).

On the other hand, when the number of preliminary fitting operations is less than the predetermined number, the robot arm 3 is driven so as to retreat the insertion member 16 to the approach position, returning to the insertion member arrangement step S2 (insertion member retreat step: S2 in FIG. 8 = insertion member arrangement step).

After the insertion member retreat step S2, the insertion member rotation step S3, the preliminary fitting operation step S4, and the preliminary fitting success/failure determination step S5 are performed again. Note that the insertion member rotation step S3 may be performed at the same time as the insertion member retreat step S2.

When a phase of the insertion member 16 and a phase of the receiving member 17 substantially coincide with each other in the preliminary fitting operation step S4 as illustrated in FIG. 5 (b),(c), the insertion member 16 is slightly fitted into the receiving recessed portion of the receiving member 17 (preliminary fitting position) as illustrated in FIG. 5 (a). In this state, reaction force which acts on the insertion member 16 from the receiving member 17 is zero or sufficiently small, and therefore the movable portion 7 does not move in the direction of the base portion 6 resisting elastic force of the air cylinder, or it moves only a slight distance.

Namely, the distance between the base portion 6 and the movable portion 7 measured by the range finder 14 does not change from the maximum distance L0 or becomes a slightly smaller distance than the maximum distance L0. Accordingly, the robot controller 2 detects that the distance between the base portion 6 and the movable portion 7 does not change from the maximum distance L0 or changes slightly at the time when the base portion 6 is lowered by the predetermined preliminary fitting operation distance L2 so as to determine that the preliminary fitting of the insertion member 16 to the receiving member 17 substantially has succeeded (preliminary fitting success/failure determination step: step S5 in FIG. 8).

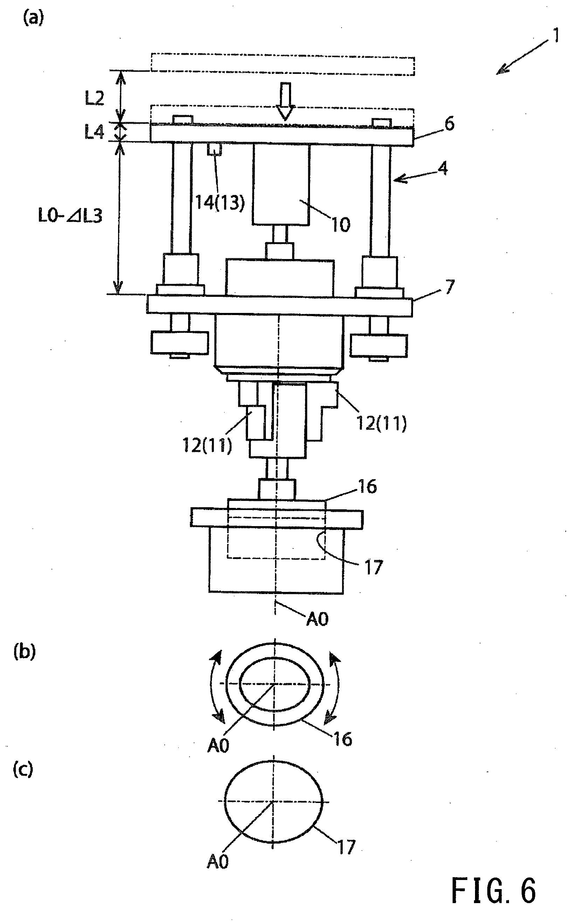

In the preliminary fitting state that the phase of the insertion member 16 and the phase of the receiving member 17 substantially coincide with each other as illustrated in Fig. 6 (b), (c), the robot arm 3 is driven so as to move the base portion 6 toward the receiving member 17 by a predetermined pressing operation distance L4 as illustrated in FIG. 6 (a) (pressing operation step: step S8 in FIG. 8).

Then, when the reaction force which acts on the insertion member 16 from the receiving member 17 is not zero, the movable portion 7 is slightly pressed to the base portion 6 side resisting the elastic force of the air cylinder 10, and thereby the distance between the base portion 6 and the movable portion 7 becomes L0 - ΔL3 as illustrated in FIG. 6 (a).

In this state, the drive shaft 5 on the tip end of the robot arm 3 is rotationally driven as indicated by arrows in FIG. 6 (b) so that an inner rotary portion (which is elliptic in cross section) of the insertion member 16 is rotated in the normal and reverse directions together with the base portion 6 (step S9 in FIG. 8). More specifically, an inner portion of the wave generator as the insertion member 16 is rotatably configured via a bearing, and the inner rotary portion is rotated together with the base portion 6. The rotational operation completes further the meshing state of the external teeth of the flexspline with the internal teeth of the circular spline, promoting the fitting operation of the insertion member 16 by the elastic force of the air cylinder. Namely, in the above-mentioned preliminary fitting state, the external teeth of the flexspline and the internal teeth of the circular spline do not always mesh with each other completely. Then, the inner rotary portion (which is elliptic in cross section) of the wave generator is rotated in the normal and reverse directions so as to move a bulged portion of the flexspline in the circumferential direction, completing the meshing state of the external teeth of the flexspline with the internal teeth of the circular spline.

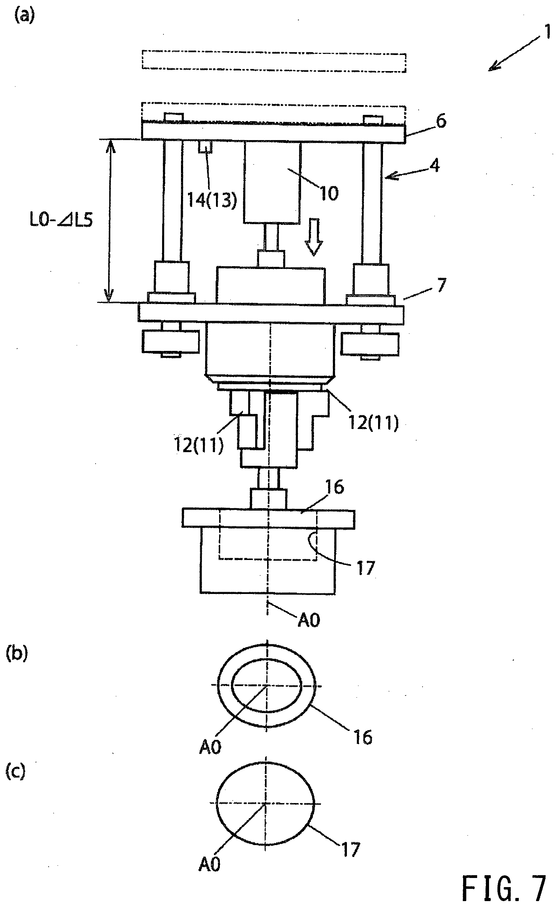

When the insertion member 16 is fitted up to a predetermined height (depth) by the elastic force of the air cylinder 10 in the state that the phase of the insertion member 16 and the phase of the receiving member 17 coincide with each other as illustrated in FIG. 7 (b),(c), the distance between the base portion 6 and the movable portion 7 measured by the range finder 14 becomes L0-L5 (L3>L5) as illustrated in FIG. 7 (a). The robot controller 2 detects that the distance between the base portion 6 and the movable portion 7 becomes L0-L5 (step S10 in FIG. 8) and finishes the fitting operation (step S11 in FIG. 8).

On the other hand, when the distance between the base portion 6 and the movable portion 7 does not reach L0-L5, the insertion member 16 is rotated in the normal and reverse directions again together with the receiving member 17. The operation is repeated until the fitting is determined to have finished in the step S10.

Note that the above-mentioned steps S8 and S9 configure a complete fitting step in the control method of the automatic assembly device according to the present invention.

As mentioned above, by the automatic assembly device 1 according to the embodiment and its control method, success/failure of the preliminary fitting of the insertion member 16 to the receiving member 17 is determined, and when it fails, the preliminary fitting operation is performed again after the insertion member 16 is retreated and rotated by a predetermined amount. Accordingly, the insertion member 16 and the receiving member 17 which are noncircular in cross section in the direction orthogonal to the fitting direction can also mesh with each other without any problem.

Also, as the complete fitting operation from the preliminary fitting position to the complete fitting position is performed utilizing the elastic force of the air cylinder 10, it can be prevented that excessive force is applied on the insertion member 16 and the receiving member 17 in the complete fitting operation.

The automatic assembly device 1 of the embodiment and its control method can be used without any problem even when a delicate operation such as fitting of the wave generator (insertion member) to the flexspline (receiving member) of the wave motion gear device is needed. Note that the automatic assembly device and its control method according to the present invention can be widely applied to other than assembly of the wave motion gear device.

Note that, although the automatic assembly device using the articulated robot is described in the embodiment above, the automatic assembly device according to the present invention does not necessarily requires the articulated robot, and a device combining a linear motion drive mechanism capable of controlling strokes and a rotary drive mechanism capable of controlling rotation amount, for example, can be used instead of the articulated robot.

Also, although the configuration that the insertion member 16 is moved so as to be fitted into the receiving member 17 is described in the embodiment above, in the automatic assembly device and its control method according to the present invention, the receiving member having the receiving recessed portion may be held by the member holding means, and the receiving member is moved toward the insertion member so as to fit the both members to each other, covering the insertion member with the receiving member.

Also, although the case that when one elliptic member is inserted into the other member which is circular and capable of being elastically deformed, the other member is elastically deformed in the necessary long axis direction so that these members are fitted to each other automatically is described in the embodiment above, the automatic assembly device and its control method according to the present invention are not limited to such a case. The automatic assembly device and its control method according to the present invention can be used even when the other member is also elliptic and one and the other long axes are coincided with each other, for example.

### Description of Reference Numerals

- 1 ...: automatic assembly device
- 2 ...: robot controller
- 3 ...: robot arm
- 4 ...: end effector
- 5 ...: rotary shaft
- 6 ...: base portion
- 7 ...: movable portion
- 8 ...: guide member
- 9 ...: stopper member
- 10 ...: air cylinder (elastic means)
- 10A ...: cylinder body of air cylinder
- 11 ...: member holding means
- 12 ...: movable gripping claw
- 13 ...: sensor means
- 14 ...: range finder
- 15 ...: workbench
- 16 ...: insertion member (one member)
- 17 ...: receiving member (the other member)
- A0 ...: center axis line

## Claims

1. An automatic assembly device for automatically fitting one member to an other member, comprising:
a base portion;
a linear motion drive unit configured to linearly drive the base portion along a fitting direction of the one member and the other member;
a rotary drive unit configured to rotationally drive the base portion about a center axis line extending in the fitting direction;
a movable portion provided to the base portion so as to be movable along the fitting direction;
a member holding unit provided to the movable portion configured to releasably hold the one member;
an elastic unit configured to apply an elastic force between the base portion and the movable portion;
a sensor unit configured to obtain a distance change information about a change in distance between the base portion and the movable portion; and
a fitting state determination unit configured to determine a fitting state of the one member and the other member based on the distance change information.

2. The automatic assembly device according to claim 1, wherein the linear motion drive means and the rotary drive means are configured by a robot arm, the base portion being mounted on the robot arm.

3. The automatic assembly device according to claim 2, wherein the fitting state determination unit is configured by a robot controller for controlling the robot arm.

4. The automatic assembly device according to claim 2 or 3, wherein the member holding unit is configured to be controlled by the robot controller for controlling the robot arm.

5. The automatic assembly device according to any one of claims 1 to 4, wherein the elastic unit has an air cylinder.

6. The automatic assembly device according to any one of claims 1 to 5, wherein the sensor unit has a range finder configured to measure a distance between the base portion and the movable portion.

7. The automatic assembly device according to any one of claims 1 to 6, wherein the one member is elliptic in cross section in a direction orthogonal to the fitting direction, and
the other member has a receiving recessed portion into which the one member is inserted.

8. The automatic assembly device according to claim 7, wherein the receiving recessed portion is formed of a flexible material.

9. The automatic assembly device according to claim 8, wherein the receiving recessed portion is circular in cross section in the direction orthogonal to the fitting direction, the other member being elastically deformed in a necessary long axis direction when the one member is inserted into the receiving recessed portion.

10. A method of controlling the automatic assembly device according to any one of claims 1 to 9 comprising:
a member arrangement step of arranging the one member to an approach position immediately above the other member in a state that the one member is held by the member holding unit;
a preliminary fitting operation step of moving the base portion toward the other member by a predetermined preliminary fitting operation distance;
a preliminary fitting success/failure determination step of determining if a preliminary fitting of the one member to the other member has succeeded or not based on the distance change information;
a complete fitting step that the one member is completely fitted into the other member when the preliminary fitting is determined to have succeeded; and
a member retreat step of retreating the one member to the approach position when the preliminary fitting is determined to have failed.

11. The method of controlling the automatic assembly device according to claim 10 further comprising a member rotation step of rotating the one member about the center axis line by a predetermined angle simultaneously with or after the member retreat step.

12. The method of controlling the automatic assembly device according to claim 11, wherein an operation of performing the preliminary fitting operation step after the member retreat step and the member rotation step is repeated, finishing the fitting operation when a number of repetitive operations exceeds a predetermined number.

13. The method of controlling the automatic assembly device according to any one of claims 10 to 12, wherein the one member is rotated about the center axis line in the complete fitting step.

14. The method of controlling the automatic assembly device according to any one of claims 10 to 13, wherein the one member is elliptic in cross section in a direction orthogonal to the fitting direction, the other member having a receiving recessed portion into which the one member is inserted, the receiving recessed portion being formed of a flexible material.
